# FASCICULE DE BREVET EUROPEEN

(11) **EP 3 000 552 B1**
(45) Date de publication et mention de la délivrance du brevet: **05.08.2020**
(21) Numéro de dépôt: 15186706.6
(22) Date de dépôt: 24.09.2015
(51) Int. Cl.: B23K 20/12

(54) **OUTIL DE SOUDAGE PAR FRICTION MALAXAGE COMPORTANT UN ORGANE DE GUIDAGE ESCAMOTABLE ET PROCEDE DE SOUDAGE**
WERKZEUG FÜR REIBRÜHRSCHWEISSVERFAHREN, DAS EIN VERSENKBARES FÜHRUNGSORGAN UMFASST, UND SCHWEISSVERFAHREN
FRICTION STIR WELDING TOOL HAVING A RETRACTABLE GUIDE MEMBER AND WELDING METHOD

(30) Priorité: 29.09.2014 FR 1459174
(43) Date de publication de la demande: 30.03.2016
(73) Titulaire: Stelia Aerospace, 17300 Rochefort (FR)
(72) Inventeur: LAMBERT, Olivier, 80800 LAHOUSSOYE (FR); LUC, Guillaume, 80600 DOULLENS (FR)
(74) Mandataire: Argyma

(56) Documents cités:
- FR-A1- 2 996 154
- JP-A- 2007 125 598
- JP-A- 2013 086 138
- US-A1- 2005 092 817
- US-A1- 2008 084 018

## Description

### DOMAINE TECHNIQUE GENERAL ET ART ANTERIEUR

La présente invention concerne le domaine du soudage de panneaux de fuselage d'un aéronef et, plus particulièrement, le soudage par friction malaxage pour assembler des panneaux de la pointe avant du fuselage d'un aéronef. Le soudage par friction malaxage est connu de l'homme du métier sous sa dénomination anglaise « Friction Stir Welding » ou « FSW »

La pointe avant du fuselage d'un aéronef est fabriquée de manière connue par l'assemblage bord à bord d'une pluralité de panneaux structuraux. Pour ce faire, les bords des panneaux à joindre sont tout d'abord usinés séparément puis soudés ensemble.

Au cours de la mise en œuvre d'un procédé de soudage par friction malaxage de deux panneaux à assembler, ces derniers sont tout d'abord maintenus fermement l'un contre l'autre sur une enclume. Puis, un outil de soudage comportant un pion de friction malaxage est enfoncé dans la matière à l'interface des deux panneaux. La force de pression appliquée continuellement par le pion et la rotation dudit pion génèrent une friction et un malaxage qui échauffent la matière des panneaux à l'interface des deux panneaux. Du fait de cet échauffement, la matière des panneaux à leur interface se déforme de manière plastique et entre en phase pâteuse. Par refroidissement et cristallisation de la matière pâteuse, un cordon de soudure se forme à l'interface des deux panneaux pour les relier solidairement. Comme la matière demeure à l'état pâteux sans devenir liquide, les propriétés mécaniques desdits panneaux sont peu dégradées.

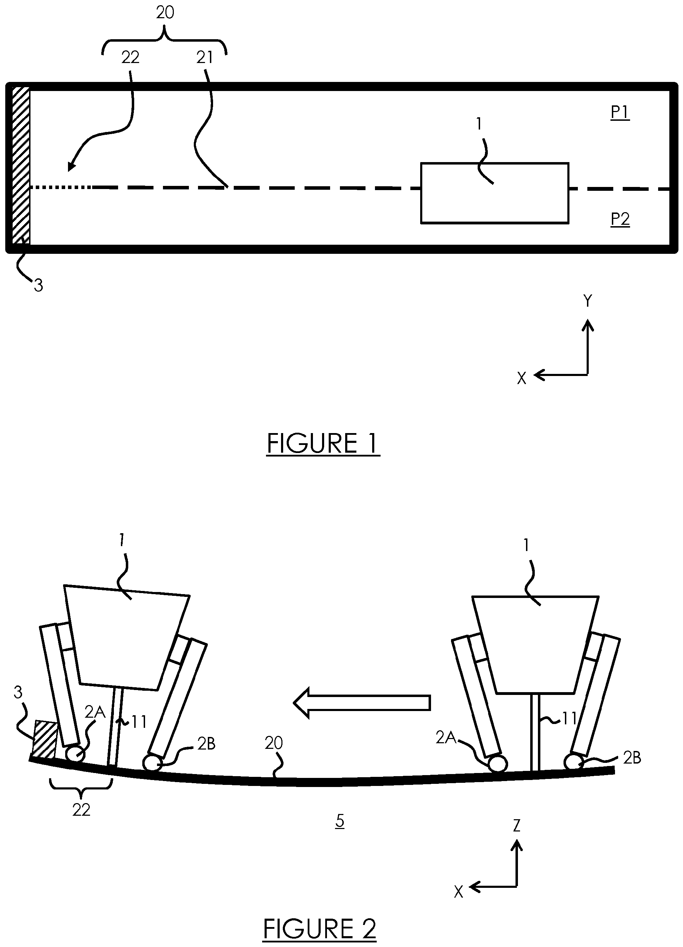

A titre d'exemple, en référence aux figures 1 et 2, il est représenté deux panneaux P1, P2 disposés sur une enclume 5 (Figure 2) remplissant un rôle de contre-appui lors du soudage par friction malaxage. Les panneaux P1, P2 sont maintenus fermement l'un contre l'autre de manière à ménager entre eux une ligne d'interface 20. Pour solidariser les panneaux P1, P2, ceux-ci doivent être soudés selon ladite ligne d'interface 20.

Par la suite, les figures sont représentées dans le repère orthogonal X, Y, Z dans lequel l'axe X s'étend horizontalement de la droite vers la gauche, l'axe Y s'étend latéralement de l'avant vers l'arrière tandis que l'axe Z s'étend verticalement du bas vers le haut. Dans cet exemple, la ligne d'interface 20 s'étend dans le plan (X, Z) et est curviligne pour souder des panneaux de fuselage de pointe avant P1, P2 de formes incurvées.

En référence aux figures 1 et 2, il est représenté un outil de soudage 1 pour souder les panneaux P1, P2 par friction malaxage selon la ligne d'interface 20. De manière connue, l'outil de soudage 1 comporte un pion de friction malaxage 11 adapté pour être entraîné en rotation et être en appui sur la ligne d'interface 20 afin d'échauffer la matière des panneaux P1, P2 et permettre le soudage. L'outil de soudage 1 est appuyé fermement contre la ligne d'interface 20 afin de plaquer les panneaux P1, P2 contre l'enclume 5. En pratique, le pion de friction malaxage 11 de l'outil de soudage 1 est orienté normalement à la ligne d'interface 20 afin, d'une part, de plaquer de manière optimale les panneaux P1, P2 contre l'enclume 5 et, d'autre part, pour générer une friction optimale lors de la rotation du pion de friction malaxage 11 avec les panneaux P1, P2. En pratique, la force d'appui du pion 11 est comprise entre 6000 Newton et 20000 Newton.

Afin de suivre le profil de la ligne d'interface, en particulier quand celle-ci est curviligne, l'outil de soudage comporte au moins un organe de guidage, tel un rouleau ou galet désigné par l'homme du métier sous sa désignation anglaise «roller», qui est solidaire de l'outil de soudage. Un tel outil d'usinage est par exemple connu par la demande de brevet US2009250505 A1 ou encore la demande de brevet US 2005/0098217 A1, sur laquelle le préambule de la revendication 1 est basé.

A titre d'exemple, en référence à la figure 2, on connaît un outil de soudage 1 adapté pour se déplacer d'amont en aval (de la droite vers la gauche selon la direction X) et qui comporte un organe de guidage aval 2A qui s'étend dans une zone d'éclaireur située en aval et en regard du pion de friction malaxage 11 ainsi qu'un organe de guidage amont 2B qui s'étend dans une zone de traîne située en amont et en regard du pion de friction malaxage 11. On entend par zone en regard du pion de friction malaxage 11 une zone située sensiblement dans le plan transversal passant par ledit pion de friction malaxage 11.

En référence à la figure 2, le pion de friction malaxage 11 de l'outil de soudage 1 est stabilisé par les organes de guidage 2A, 2B positionnés respectivement en aval et en amont du pion de friction malaxage 11 et à une distance prédéterminée de ce dernier. En pratique, chaque organe de guidage 2A, 2B est à la même hauteur verticale que le pion de friction malaxage 11 et distant de ce dernier selon l'axe horizontal X d'une distance de l'ordre de 5-10 cm.

Ainsi, lors du déplacement de l'outil de soudage 1 de l'amont vers l'aval, c'est-à-dire de la droite vers la gauche, les organes de guidage 2A, 2B permettent de régler la hauteur verticale du pion de friction malaxage 11 ainsi que son inclinaison de manière à ce que le pion de friction malaxage 11 s'étende normalement à la ligne d'interface 20 lors du soudage.

Un problème survient lorsqu'un ou plusieurs panneaux P1, P2 comporte un obstacle 3 comme illustré aux figures 1 et 2. Cet obstacle 3 forme une partie en relief et peut correspondre à une bride de montage d'un panneau, un raidisseur, une lisse, etc. De tels obstacles 3 sont généralement présents à une extrémité d'un panneau P1, P2 comme illustré à la figure 1.

En référence à la figure 2, du fait de son encombrement, l'outil de soudage 1 ne peut pas souder la ligne d'interface 20 sur toute sa longueur, l'obstacle 3 empêchant le soudage d'une portion 22 de la ligne d'interface 20. En pratique, en référence à la figure 1, une première portion 21 de la ligne d'interface 20 est soudée grâce à l'outil de soudage 1 tandis qu'une deuxième portion 22 de la ligne d'interface 20, située au voisinage de l'obstacle 3, ne peut pas être solidarisée de cette manière.

Une première solution pour résoudre cet inconvénient consiste à utiliser un deuxième outil de soudage de forme différente pour souder la deuxième portion 22 de la ligne d'interface 20. Une telle solution présente l'inconvénient de former un cordon de soudure non homogène. En outre, les caractéristiques mécaniques des panneaux P1, P2 sont fortement dégradées à la jonction de la première portion 21 et de la deuxième portion 22 de la ligne d'interface 20. Pour ces différentes raisons, une telle solution ne peut pas être retenue.

Une deuxième solution pour résoudre cet inconvénient consiste à solidariser la deuxième portion 22 de la ligne d'interface 20 par des moyens de solidarisation rapportés, en particulier, des rivets. Une telle solution présente l'inconvénient de former une liaison de la ligne d'interface 20 non homogène. Par ailleurs, outre sa durée importante de mise en œuvre, cette solution présente l'inconvénient d'augmenter la masse des panneaux structuraux P1, P2 du fait des moyens de solidarisation rapportés, ce qui présente un inconvénient.

Afin d'éliminer au moins certains de ces inconvénients, il est proposé un outil de soudage et un procédé de soudage permettant de souder une ligne d'interface sur toute sa longueur malgré la présence d'un obstacle sur un ou plusieurs panneaux à assembler.

### PRESENTATION GENERALE DE L'INVENTION

A cet effet, l'invention concerne un outil de soudage par friction malaxage selon la revendication 1.

Grâce à l'organe de déplacement, l'organe de guidage, par exemple un roller, un rouleau ou un galet, peut être déplacé d'une position de guidage à une position escamotée afin d'éviter un obstacle lors du soudage. Ainsi, l'outil de soudage peut souder entièrement une ligne d'interface de deux panneaux avec un même outil de soudage au cours de la même étape de soudage. Un tel outil de soudage est particulièrement avantageux pour souder deux panneaux comportant un obstacle à leurs extrémités, par exemple une bride de fixation. En effet, l'organe de guidage permet de guider le pion de friction malaxage lors du soudage des parties centrales des panneaux et n'est escamoté que lors du soudage de l'extrémité des panneaux pour lequel un guidage n'est pas crucial. Ainsi, le guidage est optimal en l'absence d'obstacle. En présence d'obstacle, le guidage est diminué ou supprimé afin de favoriser le passage du pion de friction malaxage.

De préférence, en position escamotée l'organe de guidage est décalé verticalement vers le haut par rapport à ladite zone d'éclaireur. Ainsi, l'organe de guidage peut avantageusement s'étendre au-dessus de l'obstacle à éviter. En outre, un mouvement vertical est simple à mettre en œuvre.

De manière préférée, l'organe de déplacement comporte au moins un vérin de déplacement reliant ledit organe de guidage à ladite base. Un tel vérin comporte de manière classique un cylindre solidaire de la base et une tige solidaire de l'organe de guidage. Un tel vérin est particulièrement robuste.

De préférence, l'organe de déplacement est configuré pour contraindre l'organe de guidage contre une paroi à souder avec un effort de pression prédéterminé. Ainsi, l'effort de pression n'est pas uniquement fourni par le pion de friction malaxage mais également par le ou les organes de guidage, ce qui permet d'adapter la force de plaquage en fonction des besoins tout en limitant le risque de marquage des panneaux par le ou les organes de guidage. De plus, les efforts de pressions du pion de friction malaxage et des organes de guidage peuvent être différents, ce qui permet une plus grande adaptation en fonction de la forme et de la nature des panneaux à souder. De manière avantageuse, on réduit les déformations des panneaux.

De préférence encore, l'outil de soudage comporte des moyens de réglage de l'effort de pression prédéterminé. Ainsi, on peut régler l'effort de plaquage pour chaque application et pour chaque portion à souder afin d'obtenir une soudure de qualité en réduisant les déformations des panneaux.

Selon un aspect préféré, ledit organe de guidage est une roulette de guidage. Une telle roulette de guidage est robuste et permet d'ajuster précisément la position et l'inclinaison du pion de friction malaxage.

De préférence, l'outil de soudage comporte au moins deux organes de guidage, de préférence, diamétralement opposés par rapport au pion de friction malaxage. Deux organes de guidage permettent d'améliorer la stabilité et un déplacement de l'outil de soudage selon les deux sens d'une direction.

Selon l'invention, l'outil de soudage comporte des moyens de détection configurés pour commander automatiquement une activation de l'organe de déplacement en cas de détection d'un obstacle en aval de ladite zone d'éclaireur. De tels moyens de détection, par exemple une caméra ou un capteur de présence, permettent d'éviter de manière automatique tout contact avec un obstacle et permettent de s'adapter à tout type de panneaux à souder.

L'invention concerne également un procédé d'assemblage selon la revendication 7.

Grâce au procédé selon l'invention, l'organe de guidage est déplacé d'une position de guidage à une position escamotée afin d'éviter un obstacle lors du soudage. Ainsi, l'outil de soudage peut souder entièrement une ligne d'interface de deux éléments avec un même outil de soudage au cours de la même étape de soudage tout en assurant un plaquage suffisant des éléments. De manière préférée, lesdits éléments peuvent se présenter sous la forme de deux panneaux, d'un raidisseur et d'un panneau, etc.

De préférence, l'étape de déplacement dudit organe de guidage est réalisée au cours de l'étape de déplacement d'amont en aval dudit outil de soudage. De manière préférée, l'outil de soudage est déplacé d'amont en aval à vitesse constante. Autrement dit, il n'est pas nécessaire de stopper l'étape de soudage pour escamoter l'organe de guidage. Cela est particulièrement avantageux pour obtenir un cordon de soudure homogène entre les portions guidées et les portions non-guidées. Un tel cordon de soudure homogène possède une durée de vie améliorée.

De préférence encore, ledit organe de guidage n'est pas en contact avec lesdits éléments en position escamotée. Ainsi, il ne contribue plus au plaquage des éléments.

Selon l'invention, l'étape de déplacement dudit organe de guidage est réalisée de manière automatique en cas de détection d'un obstacle en aval de ladite zone d'éclaireur.

### PRESENTATION DES FIGURES

l'outil de soudage peut souder entièrement une ligne d'interface de deux éléments avec un même outil de soudage au cours de la même étape de soudage tout en assurant un plaquage suffisant des éléments. De manière préférée, lesdits éléments peuvent se présenter sous la forme de deux panneaux, d'un raidisseur et d'un panneau, etc.

De préférence, l'étape de déplacement dudit organe de guidage est réalisée au cours de l'étape de déplacement d'amont en aval dudit outil de soudage. De manière préférée, l'outil de soudage est déplacé d'amont en aval à vitesse constante. Autrement dit, il n'est pas nécessaire de stopper l'étape de soudage pour escamoter l'organe de guidage. Cela est particulièrement avantageux pour obtenir un cordon de soudure homogène entre les portions guidées et les portions non-guidées. Un tel cordon de soudure homogène possède une durée de vie améliorée.

De préférence encore, ledit organe de guidage n'est pas en contact avec lesdits éléments en position escamotée. Ainsi, il ne contribue plus au plaquage des éléments.

De manière avantageuse, l'étape de déplacement dudit organe de guidage est réalisée de manière automatique en cas de détection d'un obstacle en aval de ladite zone d'éclaireur.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique de dessus de deux panneaux de fuselage et d'un outil de soudage par friction malaxage selon l'art antérieur ;
- la figure 2 est une représentation schématique de côté de deux panneaux de fuselage et d'un outil de soudage par friction malaxage selon l'art antérieur lors d'une étape de soudage ;
- la figure 3 est une représentation schématique de côté d'un outil de soudage selon l'invention ; et
- la figure 4 est une représentation schématique de deux panneaux de fuselage et d'un outil de soudage par friction malaxage lors d'une étape de soudage.

Il faut noter que les figures exposent l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

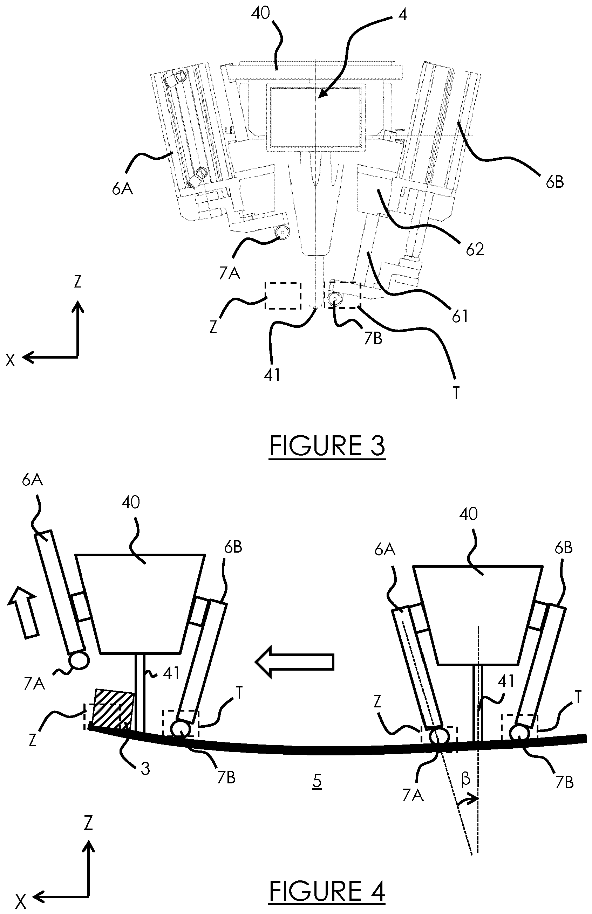

En référence à la figure 3, il est représenté un outil de soudage 4 selon l'invention qui comprend une base 40 et un pion de friction malaxage 41 monté rotatif dans ladite base 40. Une telle structure est connue de l'homme du métier et ne sera pas détaillée plus en détails.

L'outil de soudage 4 est adapté pour se déplacer longitudinalement d'amont en aval selon l'axe X orienté d'amont en aval.

Selon l'invention, l'outil de soudage 4 comporte deux organes de guidage 7A, 7B reliés à ladite base 40 qui sont respectivement montés en amont et en aval du pion de friction malaxage 41 comme illustré à la figure 3. Autrement dit, les organes de guidage 7A, 7B sont diamétralement opposés l'un par rapport à l'autre par rapport au pion de friction malaxage 41. Dans cet exemple, les organes de guidage 7A, 7B sont identiques et se présentent chacun sous la forme d'une roulette de guidage connue en soi de l'homme du métier.

En référence à la figure 3, l'outil de soudage 4 comporte un organe de déplacement 6A, 6B associé à chaque organe de guidage 7A, 7B afin de le déplacer par rapport à ladite base 40. De préférence, l'organe de déplacement 6A, 6B associé à chaque organe de guidage 7A, 7B se présente sous la forme d'un vérin, de manière préférée, un vérin hydraulique. Néanmoins, il va de soi que d'autres organes de déplacement 6A, 6B pourraient convenir, par exemple, un organe pneumatique, un organe de liaison par rotule, etc. De manière préférée, chaque organe de guidage 7A, 7B est commandé par un bouton poussoir.

Par la suite, les références 6A, 6B désignent aussi bien les organes de déplacement que les vérins.

Toujours en référence à la figure 3, l'outil de soudage 4 comporte ainsi un vérin aval 6A et un vérin amont 6B qui relient respectivement la base 40 à l'organe de guidage aval 7A et à l'organe de guidage amont 7B. Chaque vérin 6A, 6B comporte un cylindre 62 solidaire de la base 40 et une tige 61, solidaire de l'organe de guidage 7A, 7B, qui est montée coulissante dans ledit cylindre 62 selon un axe de translation. Autrement dit, un organe de guidage 7A, 7B peut coulisser selon l'axe de translation. De manière préférée, l'angle β entre l'axe du pion de friction malaxage 41 et l'axe de translation de chaque organe de déplacement 6A, 6B est compris entre 10° et 20° de manière à assurer une force d'appui s'étendant au plus proche de la direction normale à la surface à souder.

Selon l'invention, chaque organe de guidage 7A, 7B peut être déplacé entre au moins une position de guidage dans laquelle l'organe de guidage 7A, 7B s'étend en regard du pion de friction malaxage 41, c'est-à-dire, dans le plan de soudage s'étendant orthogonalement à l'axe du pion de friction malaxage 41, et au moins une position escamotée.

En référence à la figure 4 (partie de droite), en position de guidage, l'organe de guidage aval 7A s'étend dans une zone d'éclaireur Z située en aval et en regard du pion de friction malaxage 41 tandis que, en position de guidage, l'organe de guidage amont 7B s'étend dans une zone de traîne T située en amont et en regard du pion rotatif 41. Autrement dit, en position de guidage, chaque organe de guidage 7A, 7B est à proximité immédiate du pion de friction malaxage 41.

Dans cet exemple, en position de guidage, chaque organe de guidage 7A, 7B s'étend à la même hauteur verticale que le pion de friction malaxage 41 et, de préférence, à moins de 3 cm de ce dernier selon la direction longitudinale X selon laquelle se déplace l'outil de soudage 4.

En référence à la figure 3, en position escamotée, l'organe de guidage aval 7A est décalé par rapport à ladite zone d'éclaireur Z. De manière similaire, en position escamotée, l'organe de guidage amont 7B est décalé par rapport à ladite zone de traîne T (non représenté sur les figures). Autrement dit, en position escamotée, un organe de guidage 7A, 7B est distant du pion de friction malaxage 41.

Dans cet exemple, en position escamotée, un organe de guidage 7A, 7B s'étend à une hauteur verticale différente de celle du pion de friction malaxage 41, de préférence à plus de 5 cm, de préférence, de plus de 8 cm. De manière avantageuse, la distance longitudinale entre un organe de guidage 7A, 7B et le pion de friction malaxage 41 est plus importante en position escamotée qu'en position de guidage du fait de l'inclinaison β entre l'axe du pion de friction malaxage 41 et l'axe de translation de chaque organe de déplacement 6A, 6B.

De manière alternative, en position escamotée, un organe de guidage 7A, 7B peut s'étendre à la même hauteur verticale que celle du pion de friction malaxage 41 mais être décalé latéralement. A cet effet, l'organe de déplacement peut se présenter sous la forme d'une rotule ou d'un picot glissant.

Selon un aspect préféré de l'invention, l'organe de déplacement 6A, 6B associé à chaque organe de guidage 7A, 7B est configuré pour contraindre ledit organe de guidage 7A, 7B contre une paroi avec un effort de pression prédéterminé. Dans le cas présent, la pression hydraulique de chaque vérin 6A, 6B peut être réglée de manière à appliquer un effort de pression prédéterminé sur les panneaux P1, P2 de manière à les immobiliser fermement contre une enclume 5 lors du soudage comme cela sera présenté par la suite. Ainsi, chaque organe de guidage 7A, 7B peut appliquer un effort de pression qui est indépendant de l'effort de pression appliqué par le pion de friction malaxage 41, ce qui permet d'améliorer le plaquage des panneaux P1, P2 sans modifier la qualité du soudage par friction malaxage. En pratique, chaque organe de guidage 7A, 7B peut appliquer un effort de pression compris entre 0 et 3,3 kN, de préférence, de l'ordre de 1 kN.

De manière préférée, l'outil de soudage 4 comporte des moyens de détection (non représentés) configurés pour commander automatiquement un déplacement d'au moins un des organes de guidage 7A, 7B en position escamotée en cas de détection d'un obstacle 3 afin que l'obstacle 3 n'entre pas en contact avec les organes de guidage 7A, 7B. Les moyens de détection se présentent de manière préférée sous la forme d'une caméra de détection mais il va de soi que d'autres moyens de détection pourraient convenir, par exemple, un capteur de présence, un télémètre, un capteur inductif, etc.

L'invention a été présentée pour un outil de soudage 4 comportant uniquement deux organes de guidage 7A, 7B mais il va de soi que l'invention s'applique également à un outil de soudage 4 ne comportant qu'un unique organe de guidage ou plus de deux organes de guidage.

Un exemple de mise en œuvre d'un procédé d'assemblage de deux panneaux selon l'invention va être dorénavant présenté en référence à la figure 4.

Comme illustré à la figure 4, l'outil de soudage 4 se déplace d'amont en aval (droite vers la gauche sur la figure 4) le long d'une ligne d'interface 20 formée entre deux panneaux P1, P2 placés l'un contre l'autre sur une enclume 5 comme illustré par exemple à la figure 1, l'enclume 5 remplissant une fonction de contre-appui. Lors de son déplacement, le pion de de friction malaxage 41 est entraîné en rotation par rapport à la base 40 de l'outil de soudage 4 et entre en contact avec la matière des deux panneaux P1, P2 de manière à réaliser une étape de soudage.

Au cours de l'étape de soudage, les organes de guidage 7A, 7B sont en position de guidage et entrent en contact avec au moins un desdits panneaux P1, P2 afin de les plaquer contre l'enclume 5. De manière avantageuse, l'effort de pression fourni par chaque organe de guidage 7A, 7B est réglé de manière à assurer un plaquage optimal des panneaux P1, P2 contre l'enclume 5. Dans cet exemple, la pression hydraulique fournie à chaque vérin hydraulique 6A, 6B est adaptée pour obtenir l'effort de pression désiré.

Compte tenu de la présence d'un obstacle 3 à l'extrémité aval de la ligne d'interface 20, le procédé comporte une étape de déplacement de l'organe de guidage aval 7A dans sa position escamotée de manière à ce que l'organe de guidage aval 7A soit décalé par rapport à la zone d'éclaireur Z. Comme illustré à la figure 4, l'organe de guidage aval 7A est décalé verticalement vers le haut par l'organe de déplacement aval 6A afin de ne plus être en contact avec les panneaux P1, P2 et s'étendre au-dessus de l'obstacle 3. Un débattement vertical de plus de 8cm permet avantageusement à l'organe de guidage aval 7A de passer au-dessus d'une bride de fixation de hauteur verticale de l'ordre de 6 cm.

Ainsi, le pion de friction malaxage 41 peut souder la ligne d'interface 20 jusqu'à atteindre l'obstacle 3. Il n'est avantageusement plus nécessaire de recourir à des moyens de fixation rapportés comme dans l'art antérieur.

De manière avantageuse, l'organe de guidage amont 7B demeure en position de guidage afin de conserver un effort de pression sur les panneaux P1, P2. Le guidage par un unique organe de guidage 7B ne présente pas d'inconvénient lorsque l'obstacle 3 est situé à une extrémité d'un panneau P1, P2 étant donné que la force de pression nécessaire pour plaquer une extrémité d'un panneau P1, P2 est plus faible.

De manière préférée, l'étape de déplacement dudit organe de guidage aval 7A est réalisée au cours de l'étape de déplacement d'amont en aval dudit outil de soudage 4 afin de conserver la même qualité de soudage sur toute la longueur de la ligne d'interface 20. Autrement dit, le déplacement de l'outil de soudage 4 n'est pas stoppé lors du déplacement de l'organe de guidage 7A, 7B mais est réalisé d'une seule et même passe afin d'obtenir un cordon de soudure de qualité. De préférence, l'outil de soudage 4 est déplacé d'amont en aval à vitesse constante. Ainsi, les caractéristiques mécaniques des panneaux ne sont pas affectées négativement lors du soudage.

De manière préférée, lorsque l'outil de soudage 4 comporte des moyens de détection automatique, l'étape de déplacement dudit organe de guidage aval 7A est réalisée sans action d'un opérateur en cas de détection d'un obstacle en aval de ladite zone d'éclaireur Z. Ainsi, cela accélère le soudage de panneaux comportant des obstacles situés à des positions différentes.

Si l'outil de soudage 4 est déplacé en sens inverse de l'aval vers l'amont (vers la droite en référence à la figure 4), l'organe de guidage amont 7B peut également s'escamoter afin d'éviter un obstacle 3. Autrement dit, l'outil de soudage 4 selon l'invention peut avantageusement être utilisé dans les deux sens afin d'accélérer le soudage d'une pluralité de panneaux. De manière alternative, la base 40 de l'outil de soudage 4 peut être tourné de 180° lorsque seul l'organe de guidage aval 7A est associé à un organe de déplacement aval 6A afin d'éviter un obstacle 3 lors d'un déplacement de la gauche vers la droite.

L'invention a été présentée pour l'assemblage de deux panneaux mais il va de soi qu'elle s'applique à l'assemblage d'éléments divers, en particulier, l'assemblage d'un raidisseur sur un panneau.

## Revendications

1. Outil de soudage (4) par friction malaxage comportant une base (40), un pion de friction malaxage (41) monté rotatif dans ladite base (40) et au moins un organe de guidage (7A, 7B) relié à ladite base (40), l'outil de soudage (4) étant adapté pour se déplacer d'amont en aval, outil de soudage (4) **caractérisé en ce qu'**il comporte au moins un organe de déplacement (6A, 6B) de l'organe de guidage (7A, 7B) par rapport à ladite base (40) entre :
- au moins une position de guidage dans laquelle l'organe de guidage (7A, 7B) s'étend dans une zone d'éclaireur (Z) située en aval et en regard du pion de friction malaxage (41) et
- au moins une position escamotée dans laquelle l'organe de guidage (7A, 7B) est décalé par rapport à ladite zone d'éclaireur (Z)
et des moyens de détection configurés pour commander automatiquement une activation de l'organe de déplacement (6A, 6B) dans la position escamotée en cas de détection d'un obstacle (3) en aval de ladite zone d'éclaireur (Z).

2. Outil de soudage (4) selon la revendication 1, dans lequel, en position escamotée l'organe de guidage (7A, 7B) est décalé verticalement vers le haut par rapport à ladite zone d'éclaireur (Z).

3. Outil de soudage (4) selon l'une des revendications 1 à 2, dans lequel l'organe de déplacement (6A, 6B) comporte au moins un vérin de déplacement reliant ledit organe de guidage (7A, 7B) à ladite base (40).

4. Outil de soudage (4) selon l'une des revendications 1 à 3, dans lequel l'organe de déplacement (6A, 6B) est configuré pour contraindre l'organe de guidage (7A, 7B) contre une paroi à souder avec un effort de pression prédéterminé.

5. Outil de soudage (4) selon l'une des revendications 1 à 4, dans lequel ledit organe de guidage (7A) est une roulette de guidage.

6. Outil de soudage (4) selon l'une des revendications 1 à 5, dans lequel l'outil de soudage (4) comporte au moins deux organes de guidage (7A, 7B), de préférence, diamétralement opposés par rapport au pion de friction malaxage (41).

7. Procédé d'assemblage de deux éléments (P1, P2) positionnés l'un contre l'autre selon une ligne d'interface (20) au moyen d'un outil de soudage (4) par friction malaxage, lesdits éléments (P1, P2) à assembler comportant un obstacle (3), l'outil (4) comportant une base (40), un pion de friction malaxage (41) monté rotatif dans ladite base (40) et au moins un organe de guidage (7A, 7B) relié à ladite base (40), le procédé comportant :
- une étape de soudage par friction malaxage de la ligne d'interface (20) desdits éléments (P1, P2) par le pion de friction malaxage (41) entraîné en rotation par rapport à la base (40) de l'outil de soudage (4), l'outil de soudage (4) étant déplacé d'amont en aval et guidé par l'organe de guidage (7A, 7B) qui est en contact avec au moins un desdits éléments (P1, P2) dans une zone d'éclaireur (Z) située en aval et en regard du pion de friction malaxage (41) ;
l'outil (4) comportant des moyens de détection configurés pour commander automatiquement une activation de l'organe de déplacement (6A, 6B) dans la position escamotée en cas de détection d'un obstacle (3) en aval de ladite zone d'éclaireur (Z) ; et
le procédé comportant
- la détection de l'obstacle (3) en aval de ladite zone d'éclaireur (Z) et une étape de déplacement automatique de l'organe de guidage (7A) par rapport au pion de friction malaxage (41) dans une position escamotée de manière à ce que l'organe de guidage (7A, 7B) soit décalé par rapport à ladite zone d'éclaireur (Z) de manière à éviter l'obstacle (3).

8. Procédé d'assemblage selon la revendication 7, dans lequel l'étape de déplacement dudit organe de guidage (7A, 7B) est réalisée au cours de l'étape de déplacement d'amont en aval dudit outil de soudage (4).

9. Procédé d'assemblage selon l'une des revendications 7 à 8, dans lequel ledit organe de guidage (7A, 7B) n'est pas en contact avec lesdits éléments (P1, P2) en position escamotée.

10. Procédé d'assemblage selon l'une des revendications 7 à 9, dans lequel ledit outil de soudage (4) comporte au moins deux organes de guidage (7A, 7B), procédé dans lequel, les deux organes de guidage (7A, 7B) étant en position de guidage, un seul des deux organes de guidage (7A, 7B) est déplacé en position escamotée.

11. Procédé d'assemblage selon l'une des revendications 7 à 10, dans lequel, lesdits éléments (P1, P2) sont des panneaux aéronautiques.

12. Procédé d'assemblage selon les revendications 7 à 11, dans lequel, l'obstacle (3) est formé à une extrémité desdits panneaux aéronautiques.

## Patentansprüche

1. Werkzeug (4) für Reibrührschweißverfahren, aufweisend eine Basis (40), einen rotatorisch in der Basis (40) angebrachten Reibrührstift (41) und mindestens ein mit der Basis (40) verbundenes Führungsorgan (7A, 7B), wobei das Schweißwerkzeug (4) geeignet ist, sich von vorgelagert nach nachgelagert zu verlagern, wobei das Schweißwerkzeug (4) **dadurch gekennzeichnet ist, dass** es mindestens ein Verlagerungsorgan (6A, 6B) des Führungsorgans (7A, 7B) in Bezug auf die Basis (40) aufweist zwischen:
- mindestens einer Führungsposition, in welcher sich das Führungsorgan (7A, 7B) in einer Aufklärungszone (Z) erstreckt, die sich dem Reibrührstift (41) nachgelagert und gegenüber befindet, und
- mindestens einer eingezogenen Position, in welcher das Führungsorgan (7A, 7B) in Bezug auf die Aufklärungszone (Z) versetzt ist,
und Detektionsmittel, die konfiguriert sind, um eine Aktivierung des Verlagerungsorgans (6A, 6B) in die eingezogene Position bei Detektion eines der Aufklärungszone (Z) nachgelagerten Hindernisses (3) automatisch zu befehlen.

2. Schweißwerkzeug (4) nach Anspruch 1, wobei, in eingezogener Position, das Führungsorgan (7A, 7B) in Bezug auf die Aufklärungszone (Z) vertikal nach oben versetzt ist.

3. Schweißwerkzeug (4) nach einem der Ansprüche 1 bis 2, wobei das Verlagerungsorgan (6A, 6B) mindestens einen Verlagerungszylinder aufweist, der das Führungsorgan (7A, 7B) mit der Basis (40) verbindet.

4. Schweißwerkzeug (4) nach einem der Ansprüche 1 bis 3, wobei das Verlagerungsorgan (6A, 6B) konfiguriert ist, um das Führungsorgan (7A, 7B) mit einer vorher festgelegten Druckkraft gegen eine zu schweißende Wand zu zwingen.

5. Schweißwerkzeug (4) nach einem der Ansprüche 1 bis 4, wobei das Führungsorgan (7A) eine Führungsrolle ist.

6. Schweißwerkzeug (4) nach einem der Ansprüche 1 bis 5, wobei das Schweißwerkzeug (4) mindestens zwei Führungsorgane (7A, 7B) aufweist, vorzugsweise in Bezug auf den Reibrührstift (41) diametral gegenüberliegend.

7. Verfahren zur Verbindung von zwei Elementen (P1, P2), die gemäß einer Schnittstellenlinie (20) gegeneinander positioniert sind, mittels eines Reibrührschweißwerkzeugs (4), wobei die zu verbindenden Elemente (P1, P2) ein Hindernis (3) aufweisen, wobei das Werkzeug (4) eine Basis (40), einen in der Basis (40) rotatorisch angebrachten Reibrührstift (41) und mindestens ein mit der Basis (40) verbundenes Führungsorgan (7A, 7B) aufweist, wobei das Verfahren aufweist:
- einen Reibrührschweißschritt der Schnittstellenlinie (20) der Elemente (P1, P2) des in Bezug auf die Basis (40) des Schweißwerkzeugs (4) rotatorisch angetriebenen Reibrührstift (41), wobei das Schweißwerkzeug (4) von vorgelagert nach nachgelagert verlagert und von dem Führungsorgan (7A, 7B) geführt wird, das mit mindestens einem der Elemente (P1, P2) in einer Aufklärungszone (Z) im Kontakt ist, die sich dem Reibrührstift (41) nachgelagert und gegenüber befindet;
wobei das Werkzeug (4) Detektionsmittel aufweist, die konfiguriert sind, um eine Aktivierung des Verlagerungsorgans (6A, 6B) in die eingezogene Position bei Detektion eines der Aufklärungszone (Z) nachgelagerten Hindernisses (3) automatisch zu steuern, und
wobei das Verfahren aufweist
- die Detektion des der Aufklärungszone (Z) nachgelagerten Hindernisses (3) und einen Schritt der automatischen Verlagerung des Führungsorgans (7A) in Bezug auf den Reibrührstift (41) in eine eingezogene Position derart, dass das Führungsorgan (7A, 7B) in Bezug auf die Aufklärungszone (Z) derart versetzt wird, dass das Hindernis (3) vermieden wird.

8. Verbindungsverfahren nach Anspruch 7, wobei der Verlagerungsschritt des Führungsorgans (7A, 7B) während des Verlagerungsschritts des Schweißwerkzeugs (4) von vorgelagert nach nachgelagert durchgeführt wird.

9. Verbindungsverfahren nach einem der Ansprüche 7 bis 8, wobei das Führungsorgan (7A, 7B) in eingezogener Position nicht mit den Elementen (P1, P2) im Kontakt ist.

10. Verbindungsverfahren nach einem der Ansprüche 7 bis 9, wobei das Schweißwerkzeug (4) mindestens zwei Führungsorgane (7A, 7B) aufweist, wobei bei dem Verfahren, wenn die zwei Führungsorgane (7A, 7B) in Führungsposition sind, ein einziges der zwei Führungsorgane (7A, 7B) in eingezogene Position verlagert wird.

11. Verbindungsverfahren nach einem der Ansprüche 7 bis 10, wobei die Elemente (P1, P2) Flugzeugplatten sind.

12. Verbindungsverfahren nach einem der Ansprüche 7 bis 11, wobei das Hindernis (3) an einem Ende der Flugzeugplatten gebildet ist.

## Claims

1. A friction stir welding tool (4) comprising a base (40), a friction stir pin (41) rotatably mounted in said base (40) and at least one guide member (7A, 7B) connected to said base (40), the welding tool (4) being adapted to shift from upstream to downstream, the welding tool (4) being **characterised in that** it comprises at least one member (6A, 6B) for shifting the guide member (7A, 7B) with respect to said base (40) between:
- at least one guiding position in which the guide member (7A, 7B) extends in a pathfinder area (Z) located downstream and facing the friction stir pin (41) and
- at least one retracted position in which the guide member (7A, 7B) is offset with respect to said pathfinder area (Z)
and detecting means configured to automatically control an activation of the shifting member (6A, 6B) in the retracted position in case of detection of an obstacle (3) downstream of said pathfinder area (Z).

2. The welding tool (4) according to claim 1, wherein, in the retracted position, the guide member (7A, 7B) is vertically offset upwards with respect to said pathfinder area (Z).

3. The welding tool (4) according to one of claims 1 and 2, wherein the shifting member (6A, 6B) comprises at least one shifting cylinder connecting said guide member (7A, 7B) to said base (40).

4. The welding tool (4) according to one of claims 1 to 3, wherein the shifting member (6A, 6B) is configured to constrain the guide member (7A, 7B) against a wall to be welded with a predetermined pressure strain.

5. The welding tool (4) according to one of claims 1 to 4, wherein said guide member (7A) is a guide roller.

6. The welding tool (4) according to one of claims 1 to 5, wherein the welding tool (4) comprises at least two guide members (7A, 7B), preferably, diametrically opposed with respect to the friction stir pin (41).

7. A method for assembling two elements (P1, P2) positioned one against the other along an interface line (20) by means of a friction stir welding tool (4), said elements (P1, P2) to be assembled comprising an obstacle (3), the tool (4) comprising a base (40), a friction stir pin (41) rotatably mounted in said base (40) and at least one guide member (7A, 7B) connected to said base (40), the method comprising:
- a step of friction stir welding the interface line (20) of said elements (P1, P2) by the friction stir pin (41) rotatably driven with respect to the base (40) of the welding tool (4), the welding tool (4) being shifted from upstream to downstream and guided by the guide member (7A, 7B) which is in contact with at least one of said elements (P1, P2) in a pathfinder area (Z) located downstream and facing the friction stir pin (41);
the tool (4) comprising detecting means configured to automatically control an activation of the shifting member (6A, 6B) in the retracted position in case of detection of an obstacle (3) downstream of said pathfinder area (Z); and
the method comprising
- detecting the obstacle (3) downstream of said pathfinder area (Z), and a step of automatically shifting the guide member (7A) with respect to the friction stir pin (41) in a retracted position so that the guide member (7A, 7B) is shifted with respect to said pathfinder area (Z) so as to avoid the obstacle (3).

8. The assembling method according to claim 7, wherein the step of shifting said guide member (7A, 7B) is performed during the step of shifting from upstream to downstream said welding tool (4).

9. The assembling method according to one of claims 7 and 8, wherein said guide member (7A, 7B) is not in contact with said elements (P1, P2) in the retracted position.

10. The assembling method according to one of claims 7 to 9, wherein said welding tool (4) comprises at least two guide members (7A, 7B), method in which, with both guide members (7A, 7B) being in the guiding position, only one of both guide members (7A, 7B) is shifted in the retracted position.

11. The assembling method according to one of claims 7 to 10, wherein said elements (P1, P2) are aeronautical panels.

12. The assembling method according to one of claims 7 to 11, wherein the obstacle (3) is formed at one end of said aeronautical panels.
